# EUROPÄISCHE PATENTSCHRIFT

(11) **EP 2 861 456 B1**
(45) Veröffentlichungstag und Bekanntmachung des Hinweises auf die Patenterteilung: **19.09.2018**
(21) Anmeldenummer: 13728355.2
(22) Anmeldetag: 04.06.2013
(51) Int. Cl.: B60N 2/10, B60N 2/20, B60N 2/30

(54) **SCHARNIERMECHANISMUS FÜR EINEN FAHRZEUGSITZ UND VERFAHREN ZUM BETRIEB EINES SOLCHEN MECHANISMUS IN DEM FAHRZEUGSITZ**
HINGE MECHANISM FOR A VEHICLE SEAT AND METHOD FOR OPERATING THAT MECHANISM IN SAID VEHICLE SEAT
MÉCANISME DE CHARNIÈRE DESTINÉ À UN SIÈGE DE VÉHICULE, ET PROCÉDÉ PERMETTANT DE FAIRE FONCTIONNER UN TEL MÉCANISME DANS LEDIT SIÈGE DE VÉHICULE

(30) Priorität: 13.06.2012 DE 102012209933; 20.09.2012 DE 102012216901
(43) Veröffentlichungstag der Anmeldung: 22.04.2015
(73) Patentinhaber: Adient Luxembourg Holding S.à r.l., 1855 Luxembourg (LU)
(72) Erfinder: ABRAHAM, James, 51147 Köln (DE); ADVENA, Robin, 50670 Köln (DE)
(74) Vertreter: Finger, Catrin
(86) Internationale Anmeldenummer: PCT/EP2013/061483
(87) Internationale Veröffentlichungsnummer: WO 2013/186086

(56) Entgegenhaltungen:
- GB-A- 2 408 677
- US-A1- 2011 049 953

## Beschreibung

Die Erfindung betrifft einen Scharniermechanismus für einen Fahrzeugsitz. Weiterhin betrifft die Erfindung ein Verfahren zum Betrieb eines Fahrzeugsitzes mit einem solchen Scharniermechanismus.

Im Stand der Technik sind Rückenlehnen von Fahrzeugsitzen bei einem feststehenden Sitzteil umklappbar, so dass sie flach auf dem Sitzteil des Fahrzeugsitzes aufliegen. Diese Funktionalität wird auch als Fold-Flat-Vorgang bezeichnet.

Alternativ kann eine Rückenlehne eines Fahrzeugsitzes in Richtung eines Sitzteils geklappt werden, während das Sitzteil mit der daran gekoppelten Rückenlehne schwenkbar ist. Diese Funktionalität wird auch als Fold-and-Tumble-Vorgang bezeichnet.

Aus der DE 10 2006 017 797 A1 ist eine Fahrzeugsitz-Löseanordnung bekannt. Der Fahrzeugsitz umfasst eine Sitzlehne, eine Sitzfläche, und einen Sitzrahmen. Der Sitzrahmen hält die Sitzfläche und weist weiterhin eine Lehnendrehanordnung auf, die derart ausgebildet ist, dass sich die Sitzlehne zwischen einer aufrechten Position und einer geklappten Position bewegen kann, in der die Sitzlehne nach unten auf die Sitzfläche geklappt ist. Mittels eines Scharniermechanismus wird der hintere Teil des Sitzrahmens drehend nach oben und vorne gehoben, um den Sitzrahmen zu einer gekippten Position zu bewegen. Ein erster Verriegelungsmechanismus ist ausgebildet, um die Sitzlehne in der aufrechten Position zu verriegeln. Ein zweiter Verriegelungsmechanismus ist ausgebildet, im die Sitzfläche an dem Fahrzeugboden zu verriegeln. Zudem ist die Löseanordnung ausgebildet, um den ersten und den zweiten Verriegelungsmechanismus zu lösen, und weist ein Löseglied und eine Rollenanordnung auf, um eine Hebelwirkung bei der Betätigung der Löseanordnung vorzusehen.

Darüber hinaus beschreiben die FR 2 781 435 und die US 2011/0049953 A1 einen Scharniermechanismus für einen Fahrzeugsitz.

Aufgabe der vorliegenden Erfindung ist es, einen gegenüber dem Stand der Technik verbesserten Scharniermechanismus für einen Fahrzeugsitz und ein verbessertes Verfahren zum Betrieb eines Fahrzeugsitzes mit einem solchen Scharniermechanismus anzugeben.

Hinsichtlich des Scharniermechanismus für einen Fahrzeugsitz wird die Aufgabe durch die im Anspruch 1 angegebenen Merkmale gelöst.

Hinsichtlich des Verfahrens zum Betrieb eines Fahrzeugsitzes mit einem solchen Scharniermechanismus wird die Aufgabe durch die im Anspruch 10 angegebenen Merkmale gelöst.

Vorteilhafte Weiterbildungen der Erfindung sind Gegenstand der Unteransprüche.

Der Scharniermechanismus für einen Fahrzeugsitz umfasst erfindungsgemäß einen Betätigungshebel, einen Ausrückhebel und einen Umlenkhebel sowie ein separates erstes Bedienelement für einen Umklappvorgang einer Lehne in Richtung auf ein Sitzteil bei einem feststehenden Sitzteil und ein separates zweites Bedienelement für ein Umklappen der Lehne bei einer gleichzeitigen oder nachfolgenden Schwenkbewegung des Sitzteils. Der Scharniermechanismus umfasst weiterhin einen Ausrückhebel, eine Hauptdrehachse und eine Umlenkstange, die endseitig am Umlenkhebel angelenkt ist. Bei Betätigung des ersten Bedienelements ist der Umlenkhebel mit dem ersten Bedienelement auf Mitnahme derart koppelbar, dass die Umlenkstange den Scharniermechanismus öffnet. Bei Betätigung des zweiten Bedienelements öffnet dieses den Scharniermechanismus direkt, beispielsweise hebelfrei mittels eines Bowdenzugs, und der Betätigungshebel ist mit dem Ausrückhebel auf Mitnahme derart koppelbar, dass der Fahrzeugsitz bodenseitig entriegelbar ist.

Durch diese vergleichsweise geringe Anzahl von Bauteilen ist ein einfacher kombinierter Scharniermechanismus mit sowohl einer separaten Klappfunktion (= Fold-Flat-Vorgang) als auch einer separaten Klapp- und Schwenk-Funktion (= Fold-and-Tumble-Vorgang) für den Fahrzeugsitz ermöglicht. Durch die vergleichsweise geringe Anzahl zusätzlicher Bauelemente ist darüber hinaus ein herkömmlicher Scharniermechanismus auf einfache Weise zu einem erfindungsgemäßen Scharniermechanismus erweiterbar.

Darüber hinaus sind durch die Trennung des genannten Fold-Flat-Vorgangs und des Fold-and-Tumble-Vorgangs Fehlbedienungen vermieden.

Zweckmäßigerweise ist der Betätigungshebel L-förmig ausgebildet und umfasst einen ersten Hebelarm und einen zweiten Hebelarm, welche in einem Winkel von 90 Grad zueinander angeordnet sind. Der Betätigungshebel ist in seinem zentralen Bereich um eine Schwenkachse schwenkbar und gestellfest an der Lehne des Fahrzeugsitzes angeordnet. Die Ausbildung mit zwei Hebelarmen und die schwenkbare Anordnung an der Rückenlehnenstruktur ermöglicht eine einfache Verstellung des Betätigungshebels und ermöglicht besonders vorteilhafterweise eine Bewegung des ersten Hebelarms entlang unterschiedlicher Betätigungswege.

Bevorzugt ist an einem freien Ende des ersten Hebelarms ein abragender Gleitnocken angeordnet. Dies ermöglicht eine reibungsminimierte Bewegung des Gleitnockens entlang der Betätigungswege.

Der Betätigungshebel ist mittels einer Feder, welche im Bereich der Schwenkachse angeordnet ist, vorgespannt. Dadurch ist der Betätigungshebel in Anlage am jeweiligen Betätigungsweg gehalten.

Der Gleitnocken des ersten Hebelarms des Betätigungshebels ist entlang eines ersten Betätigungswegs oder eines zweiten Betätigungswegs bewegbar. Dabei ist der erste Betätigungsweg als Betätigungskontur, insbesondere Führungskontur an Grenzflächen oder Ebenen einer Basisplatte, ausgebildet und eine Bewegung des ersten Hebelarms des Betätigungshebels entlang des ersten Betätigungswegs bewirkt den Umklappvorgang der Rückenlehne des Fahrzeugsitzes bei feststehendem Sitzteil.

Der zweite Betätigungsweg ist als Gleitkontur, insbesondere Führungskontur an Grenzflächen oder Ebenen einer Basisplatte, ausgebildet und eine Bewegung des ersten Hebelarms des Betätigungshebels entlang des zweiten Betätigungswegs bewirkt den Umklappvorgang der Rückenlehne bei einer gleichzeitigen oder nachfolgenden Schwenkbewegung des Sitzteils. Dadurch sind der Fold-Flat-Vorgang und der Fold-and-Tumble-Vorgang durch die unterschiedlichen Betätigungswege funktionell separiert, so dass Fehlbedienungen sicher vermieden sind.

Zweckmäßigerweise ist der erste Betätigungsweg in Abhängigkeit der Position des Umlenkhebels, insbesondere von dessen Betätigungsabschnitt, blockierbar, so dass der zweite Betätigungsweg benutzbar ist. Eine Aufhebung der Blockade durch die entsprechende Bedienung öffnet den ersten Betätigungsweg.

Beim Verfahren zum Betrieb eines Fahrzeugsitzes mit einem Scharniermechanismus wird mit einem ersten Bedienelement ein Umklappvorgang einer Lehne des Fahrzeugsitzes bei einem feststehenden Sitzteil aktuiert, so dass die Lehne flach auf dem Sitzteil des Fahrzeugsitzes aufliegt oder es wird mit einem zweiten Bedienelement ein Umklappvorgang der Lehne bei einer gleichzeitigen oder nachfolgenden Schwenkbewegung des Sitzteils aktuiert, wobei der Umklappvorgang der Lehne und die Schwenkbewegung des Sitzteils nach Betätigung der Bedienelemente selbsttätig ablaufen.

Mittels des Umklappens einer Rückenlehne des Fahrzeugsitzes bei einem feststehenden Sitzteil ist der Fahrzeugsitz bei einer Nichtbenutzung besonders kompakt und platzsparend im Fahrzeug angeordnet, so dass beispielsweise ein Laderaum signifikant vergrößert ist.

Mittels des Umklappens der Rückenlehne bei einer gleichzeitigen oder nachfolgenden Schwenkbewegung des Sitzteils ist ein Zugang zu einer hinteren Sitzreihe in einem Fahrzeug signifikant erleichtert.

Die Erfindung ist besonders für einen einzelnen Fahrzeugsitz, grundsätzlich aber auch für eine Sitzbank geeignet.

Ausführungsbeispiele der Erfindung werden im Folgenden anhand von Zeichnungen näher erläutert.

Dabei zeigen:
- Fig. 1: schematisch eine perspektivische Ansicht eines Fahrzeugsitzes mit einem erfindungsgemäßen Scharniermechanismus,
- Fig. 2: schematisch eine Seitenansicht eines erfindungsgemäßen Scharniermechanismus für einen Fahrzeugsitz in einer Gebrauchsposition,
- Fig. 3: schematisch eine Seitenansicht eines erfindungsgemäßen Scharniermechanismus für einen Fahrzeugsitz bei Betätigung des ersten Bedienelements,
- Fig. 4: schematisch eine Seitenansicht eines erfindungsgemäßen Scharniermechanismus für einen Fahrzeugsitz während eines Fold-Flat-Vorgangs und
- Fig. 5: schematisch eine Seitenansicht eines erfindungsgemäßen Scharniermechanismus für einen Fahrzeugsitz während eines Fold-and-Tumble-Vorgangs.

Einander entsprechende Teile sind in allen Zeichnungen mit den gleichen Bezugszeichen versehen.

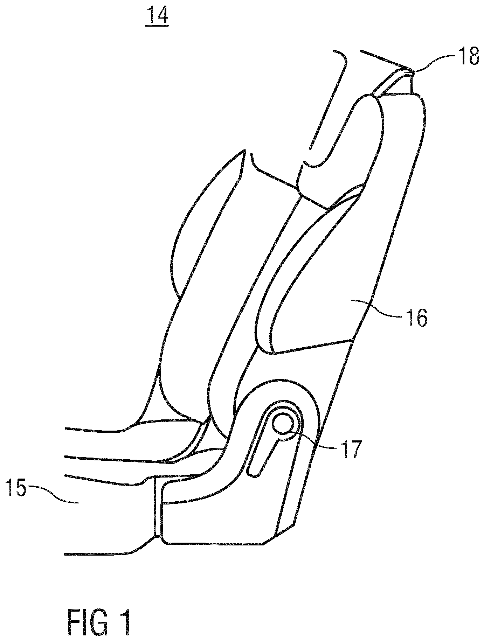

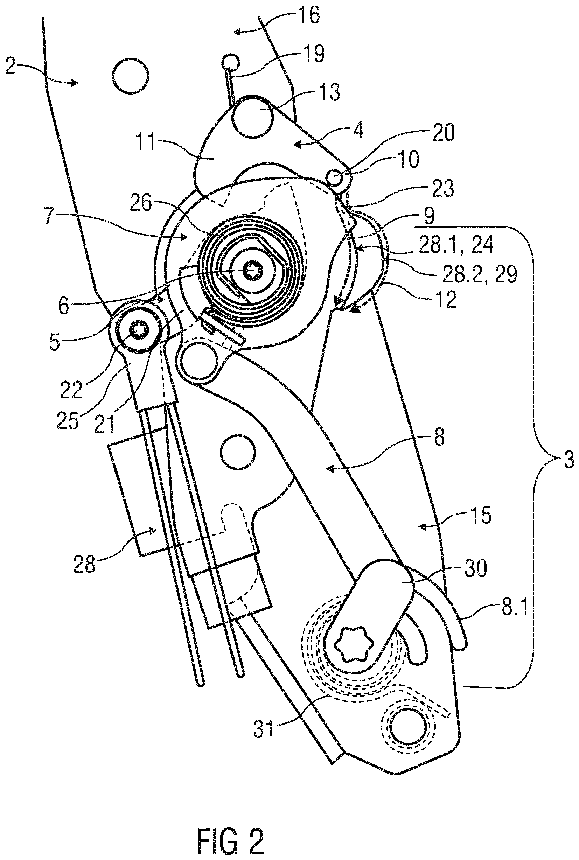

Figur 1 zeigt schematisch eine perspektivische Ansicht eines Fahrzeugsitzes 14 mit einem erfindungsgemäßen, in Figuren 2 bis 5 näher dargestellten Scharniermechanismus, welcher als herkömmlicher Rastbeschlag ausgebildet ist und im Folgenden auch als Rastbeschlag bezeichnet wird.

Der Fahrzeugsitz 14 für ein Kraftfahrzeug weist ein Sitzteil 15 und eine relativ zu diesem um eine Hauptdrehachse 6 schwenkbare Lehne 16 auf.

Mittels Betätigung eines ersten Bedienelementes 17, welches auf der Hauptdrehachse 6 seitlich am Fahrzeugsitz 14 angeordnet ist, ist die Neigung der Lehne 16 relativ zum Sitzteil 15 zwischen verschiedenen Gebrauchsstellungen einstellbar. Dabei ist das erste Bedienelement 17 als Bedienhebel ausgebildet und beispielsweise form- und/oder kraftschlüssig mit einer nicht dargestellten Übertragungsstange gekoppelt. Das erste Bedienelement 17 ist bevorzugt endseitig an der Übertragungsstange auf der in Richtung einer Fahrzeugtür weisenden Seite des Fahrzeugsitzes 14 angeordnet. Eine solche herkömmliche Übertragungsstange ist im Bereich der Hauptdrehachse 6 angeordnet und koppelt den linksseitigen mit dem rechtsseitigen Rastbeschlag.

Weiterhin ist mittels der entsprechenden Bedienung des ersten Bedienelementes 17 ein so genannter Fold-Flat-Vorgang aktuierbar. Bei einem solchen Fold-Flat-Vorgang wird die Lehne 16 flach auf das Sitzteil 15 umgeklappt. Nach einem Auslösen des Umklappvorgangs der Lehne 16 mittels des ersten Bedienelementes 17 läuft der Umklappvorgang der Lehne 16 selbsttätig, insbesondere von einem vorkomprimierten Federelement 26 (in Figur 2 dargestellt) getrieben, ab.

Mittels Betätigung eines zweiten Bedienelementes 18 ist separat vom Fold-Flat-Vorgang ein so genannter Fold-and-Tumble-Vorgang des Fahrzeugsitzes 14 aktuierbar. Als Fold-and-Tumble-Vorgang wird ein Umklappvorgang der Lehne 16 bei einer gleichzeitigen oder nachfolgenden Schwenkbewegung des Sitzteils 15 um eine vorderseitig am Sitzteil 15 angeordnete Drehachse bezeichnet. In dieser Stellung des Fahrzeugsitzes 14 ist ein Zugang zu einer hinteren Sitzreihe erleichtert. Dabei ist das zweite Bedienelement 18 als Bedienhebel ausgebildet und an einem oberen Ende der Lehne 16 schwenkbar auf der in Richtung einer Fahrzeugtür weisenden Seite des Fahrzeugsitzes 14 angeordnet.

Das Sitzteil 15 ist mittels zumindest eines nicht dargestellten Bodenscharniers mit einer Fahrzeugstruktur gekoppelt und verriegelt. Um die Schwenkbewegung des Sitzteils 15 um eine vorderseitig am Sitzteil 15 angeordnete Drehachse zu ermöglichen, muss dieses Bodenscharnier während des Fold-and-Tumble-Vorgangs geöffnet werden.

Nach einem Auslösen des Fold-and-Tumble-Vorgangs des Fahrzeugsitzes 14 läuft der Umklappvorgang der Lehne 16 selbsttätig, insbesondere von dem vorkomprimierten Federelement 26 getrieben, ab. Im Verlauf der Umklappbewegung werden mittels des erfindungsgemäß ausgebildeten Rastbeschlags die Bodenscharniere geöffnet, so dass im weiteren Verlauf die Schwenkbewegung des Sitzteils 15 mit der umgeklappten Lehne 16 selbsttätig, insbesondere von einem herkömmlichen, nicht dargestellten weiteren vorkomprimierten Federelement angetrieben, erfolgt.

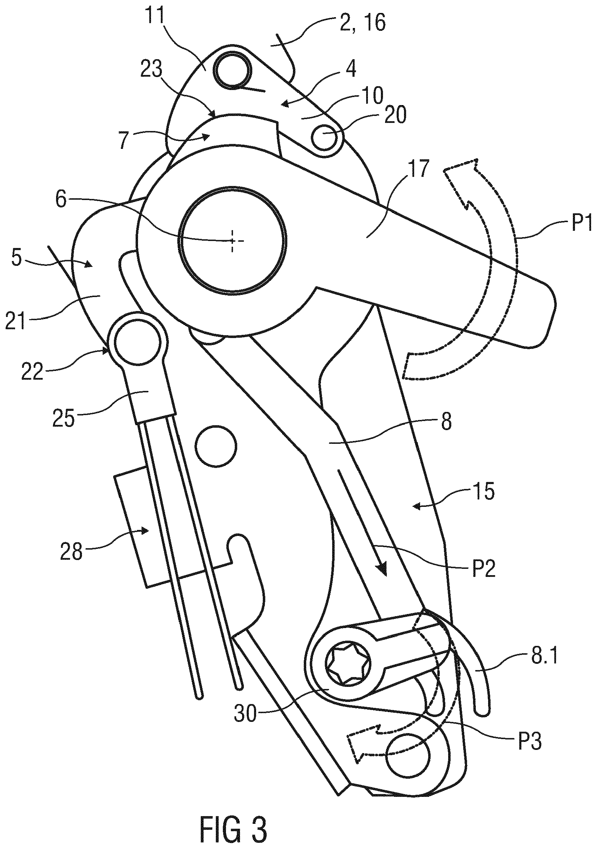

Figur 2 zeigt schematisch eine Seitenansicht eines erfindungsgemäßen Rastbeschlags für den Fahrzeugsitz 14 in einer Gebrauchsposition. Der Rastbeschlag gemäß Figur 2 und den nachfolgenden Figuren 3 bis 5 ist gegenüberliegend zum in Figur 1 dargestellten Rasbeschlag am Fahrzeugsitz 14 angeordnet. Die beiden, beidseitig am Fahrzeugsitz 14 angeordneten Rastbeschläge sind über eine nicht näher dargestellte, herkömmliche Übertragungsstange miteinander gekoppelt. Das erste Bedienelement 17 ist nur an einem der Rastbeschläge angeordnet, insbesondere endseitig an die Übertragungsstange gekoppelt.
Der Rastbeschlag ist zwischen der Lehne 16 des Fahrzeugsitzes 14 und dem Sitzteil 15 angeordnet und ermöglicht eine Umklappbewegung der Lehne 16 gegenüber dem Sitzteil 15 und/oder eine Neigungsverstellung der Lehne 16 gegenüber dem Sitzteil 15.

Der Rastbeschlag umfasst einen ersten Koppelabschnitt 2 zur Anbindung an die Lehne 16 und einen zweiten Koppelabschnitt 3 zur Anbindung an das Sitzteil 15. Dabei ist der erste Koppelabschnitt 2 in herkömmlicherweise an einem ersten Beschlagteil des Rastbeschlags drehfest angeordnet und verschwenkt mit diesem relativ zu einem zweiten Beschlagteil des Rastbeschlags, an welchem der zweite Koppelabschnitt 3 drehfest angeordnet ist.

Weiterhin umfasst der Rastbeschlag einen Betätigungshebel 4, einen Ausrückhebel 5, die Hauptdrehachse 6, einen Umlenkhebel 7 und eine Umlenkstange 8.

Der Betätigungshebel 4 ist L-förmig ausgebildet und in seinem zentralen Bereich um eine Schwenkachse 13 schwenkbar an der Lehne 16 gestellfest angeordnet. Der Betätigungshebel 4 umfasst einen ersten Hebelarm 10 und einen zweiten Hebelarm 11, welche in einem Winkel von ca. 90 Grad +/- 5° bis 10°zueinander angeordnet sind.

Der Betätigungshebel 4 ist mittels einer Feder 19, welche im Bereich der Schwenkachse 13 angeordnet und endseitig gehalten ist, im Uhrzeigersinn vorgespannt.

Am freien Ende des ersten Hebelarms 10 ist ein abragender Gleitnocken 20 angeordnet, welcher an korrespondierenden Ausformungen und/oder Gleitflächen des Umlenkhebels 7 oder anderer Komponenten anschlägt bzw. entlang gleitet.

Im Ausführungsbeispiel nach Figur 2 sind ein erster Betätigungsweg 9 und ein zweiter Betätigungsweg 12 des Gleitnockens 20 des ersten Hebelarms 10 des Betätigungshebels 4 mittels gestrichelter Linien dargestellt. Dabei wird der Gleitnocken 20 an einer Ebene 28.1 einer Basisplatte 28 entlang des ersten Betätigungswegs 9 oder an einer Grenzfläche 28.2 der Basisplatte 28 entlang des zweiten Betätigungswegs 12 geführt.

Die übrigen Komponenten sind in noch zu beschreibender Art und Weise derart ausgebildet, dass der Gleitnocken 20 des Betätigungshebels 4 in Abhängigkeit der Stellung des Umlenkhebels 7 während einer Fold-Flat- oder Fold-Tumble-Bewegung der Lehne 16 entlang eines von zwei Betätigungswegen 9, 12 gleitet und geführt wird.
Der Ausrückhebel 5 ist drehbar auf der Hauptdrehachse 6 gelagert und weist endseitig seiner hebelartigen Ausformung 21 einen Koppelabschnitt 22 auf. Dieser Koppelabschnitt 22 ist als Aufnahme für zumindest einen herkömmlichen Betätigungszug 25 ausgebildet, welcher in Figur 3 abschnittsweise dargestellt ist. Der Betätigungszug 25 ist an seinem anderen Ende mit dem zumindest einen Bodenscharnier oder Bodenschloss des Fahrzeugsitzes 14 gekoppelt.

Zur Aktuierung eines Umklappvorgangs der Lehne 16 des Fahrzeugsitzes 14 bei einem feststehenden Sitzteil 15 wird das erste Bedienelement 17 betätigt, so dass die Lehne 16 nach dem Umklappvorgang flach auf dem Sitzteil 15 des Fahrzeugsitzes 14 aufliegt. Dieser Betätigungsvorgang ist in Figur 3 schematisch dargestellt.

Das erste Bedienelement 17 ist bevorzugt auf der Hauptdrehachse 6 drehbar angeordnet. Der Umlenkhebel 7 ist mit dem Bedienelement 17 in geeigneter Weise auf Mitnahme gekoppelt und bewegt sich aufgrund der Betätigung des ersten Bedienelements 17 entgegen dem Uhrzeigersinn, wie durch Pfeil P1 dargestellt. Der Umlenkhebel 7 weist einen Betätigungsabschnitt 23 auf, zu dessen Ausformung der Außendurchmesser des Umlenkhebels 7 vergrößert ist.

In der Gebrauchsposition des Fahrzeugsitzes 14 nach Figur 2 liegt der abragende Gleitnocken 20 des Betätigungshebels 4 am Betätigungsabschnitt 23 des Umlenkhebels 7. Durch die Schwenkung des Umlenkhebels 7 schwenkt der Betätigungsabschnitt 23 in Richtung des zweiten Hebelarms 11 des Betätigungshebels 4 und gelangt in Anlage zu diesem.

Durch die Schwenkung des Umlenkhebels 7 und des Betätigungsabschnitts 23 wird der erste Betätigungsweg 9 freigegeben. Dieser erste Betätigungsweg 9 ist bevorzugt als Betätigungskontur 24 ausgebildet und in der Gebrauchsposition des Fahrzeugsitzes 14 nach Figur 2 vom Betätigungsabschnitt 23 des Umlenkhebels 7 zumindest abschnittsweise verdeckt und somit blockiert. Die Betätigungskontur 24 ist dabei sitzteilfest an der Ebene 28.1 der Basisplatte 28 ausgeformt. Alternativ kann die Betätigungskontur 24 an einer anderen Komponente im zweiten Koppelabschnitt 3 ausgeformt sein.

In einer alternativen, nicht näher dargestellten Ausführungsform kann anstelle die Betätigungskontur 24 als eine Betätigungsnut ausgebildet sein.

Die endseitig mit dem Umlenkhebel 7 gekoppelte Umlenkstange 8 öffnet daraufhin den Rastbeschlag, indem die Umlenkstange 8 eine Bewegung nach unten entlang des Pfeils P2 ausführt, wodurch ein endseitig in einer Gabel 8.1 der Umlenkstange 8 gelagerter Steuerhebel 30 entlang des Pfeils P3 nach unten geschwenkt wird, so dass eine Umklappbewegung der Lehne 16 auf das Sitzteil 15 ermöglicht ist.

Beim Aufstellen der Lehne 16 in die Ausgangsstellung wird der Steuerhebel 30 selbsttätig, insbesondere von einem beim Umklappen der Lehne 16 komprimierten Federelement 31 getrieben, in die Ausgangsstellung gebracht.

Da sich der erste Hebelarm 10 des Betätigungshebels 4 während der Umklappbewegung der Lehne 16 den ersten Betätigungsweg 9 entlang bewegt, kann der zweite Hebelarm 11 des Betätigungshebels 4 nicht mit dem Ausrückhebel 5 in Kontakt kommen. Somit wird keine Schwenkbewegung des Sitzteils 15 aktuiert.

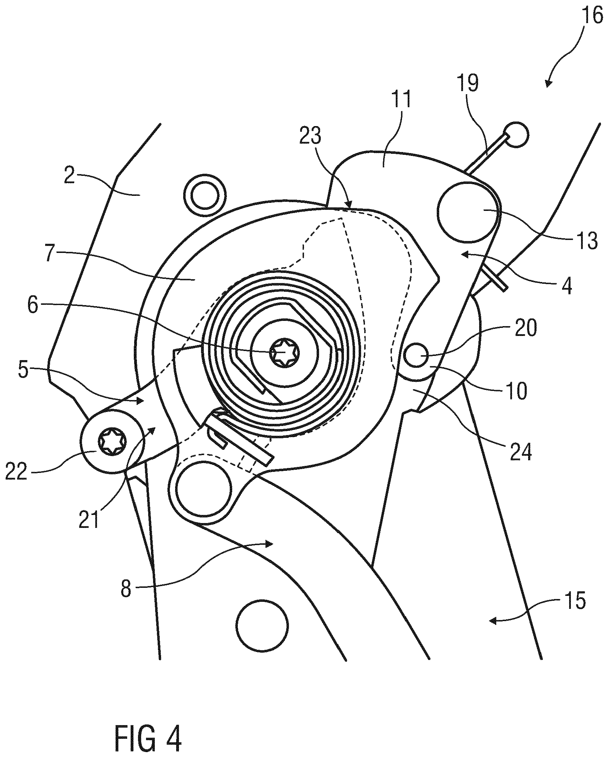

Der Fold- and Tumble-Vorgang und somit die Schwenkbewegung des Sitzteils 15 ist in Figur 4 schematisch dargestellt.

Zur Aktuierung eines Umklappvorgangs der Lehne 16 bei einer gleichzeitigen oder nachfolgenden Schwenkbewegung des Sitzteils 15 wird das zweite Bedienelement 18 betätigt, welches den Rastbeschlag direkt öffnet, d. h. nicht indirekt mittels der Umlenkstange 8 wie vorstehend beschrieben. Das heißt, die Umlenkstange 8 und der mit dieser gekoppelte Umlenkhebel 7 verbleiben in einer unveränderten Position. Dadurch blockiert der Betätigungsabschnitt 23 des Umlenkhebels 7 die Betätigungskontur 24 und derart den ersten Betätigungsweg 9 des ersten Hebelarms 10 des Betätigungshebels 4.

Daraus resultierend bewegt sich der Gleitnocken 20 des ersten Hebelarms 10 des Betätigungshebels 4 während der Umklappbewegung der Lehne 16 den zweiten Betätigungsweg 12 entlang. Der zweite Betätigungsweg 12 ist bevorzugt durch eine Gleitkontur 29 an der Grenzfläche 28.2 der Basisplatte 28 gebildet, welche sitzteilfest, beispielsweise im zweiten Koppelabschnitt 3, ausgeformt ist. Die Basisplatte 28 weist vorzugsweise erhabene Ausformungen und somit unterschiedliche Ebenen auf. Die Betätigungskontur 24 und die Gleitkontur 29 sind auf unterschiedlichen Ebenen der Basisplatte 28 durch entsprechend erhabene Ausformungen gebildet.

Während der Umklappbewegung der Lehne 16 tritt der zweite Hebelarm 11 des Betätigungshebels 4 mit einem entsprechend ausgeformten Mitnehmer 27 des Ausrückhebels 5 in Kontakt. Der Ausrückhebel 5 rotiert dadurch relativ zum Sitzteil 15 im Uhrzeigersinn. Dabei verschwenkt die Ausformung 21 mit den daran angeordneten Betätigungszügen 25 derart, dass die Betätigungszüge 25 ausgelöst werden.

Der Ausrückhebel 5 entriegelt dadurch die Bodenscharniere und ein nicht dargestelltes, komprimiertes Federelement, dessen Federkraft auf das Sitzteil 15 einwirkt und diesen schwenkt.

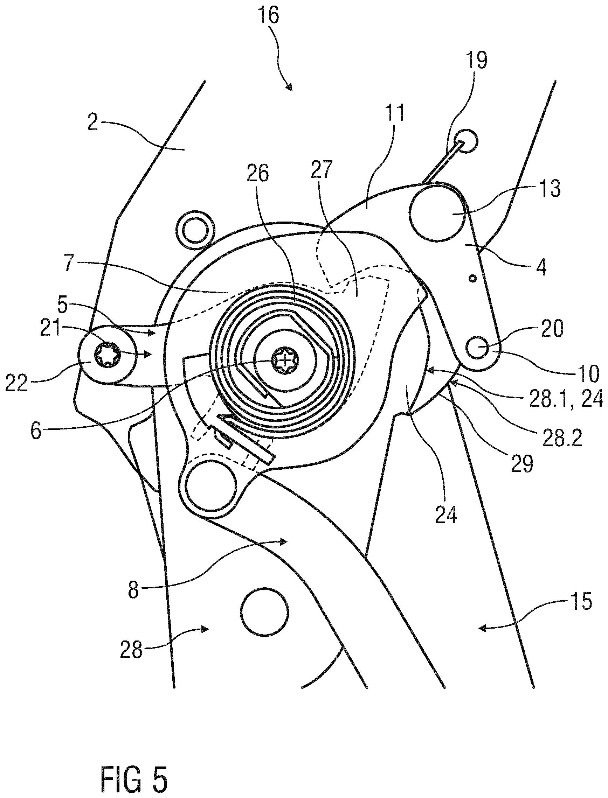

Dieser Vorgang ist in Figur 5 schematisch dargestellt.

### Bezugszeichenliste

- 2: erster Koppelabschnitt
- 3: zweiter Koppelabschnitt
- 4: Betätigungshebel
- 5: Ausrückhebel
- 6: Hauptdrehachse
- 7: Umlenkhebel
- 8: Umlenkstange
- 8.1: Gabel
- 9: erster Betätigungsweg
- 10: erster Hebelarm
- 11: zweiter Hebelarm
- 12: zweiter Betätigungsweg
- 13: Schwenkachse
- 14: Fahrzeugsitz
- 15: Sitzteil
- 16: Lehne
- 17: erstes Bedienelement
- 18: zweites Bedienelement
- 19: Feder
- 20: Gleitnocken
- 21: hebelartige Ausformung
- 22: Koppelabschnitt
- 23: Betätigungsabschnitt
- 24: Betätigungskontur
- 25: Betätigungszug
- 26: Federelement
- 27: Mitnehmer
- 28: Basisplatte
- 28.1: Ebene
- 28.2: Grenzfläche
- 29: Gleitkontur
- 30: Steuerhebel
- 31: Federelement

- P1 bis P3: Pfeile

## Patentansprüche

1. Scharniermechanismus für einen Fahrzeugsitz (14),
umfassend
- einen Betätigungshebel (4),
- einen Ausrückhebel (5),
- einen Umlenkhebel (7) und eine mit diesem endseitig gekoppelte Umlenkstange (8),
- ein erstes Bedienelement (17) für einen Umklappvorgang einer Lehne (16) in Richtung auf ein Sitzteil (15) bei einem feststehenden Sitzteil (15) und
- ein separates zweites Bedienelement (18) für ein Umklappen der Lehne (16) bei einer gleichzeitigen oder nachfolgenden Schwenkbewegung des Sitzteils (15), wobei
- bei Betätigung des ersten Bedienelements (17) der Umlenkhebel (7) mit dem ersten Bedienelement (17) auf Mitnahme derart koppelbar ist, dass die Umlenkstange (8) den Scharniermechanismus öffnet, und
- bei Betätigung des zweiten Bedienelements (18) dieses den Scharniermechanismus direkt öffnet und der Betätigungshebel (4) mit dem Ausrückhebel (5) auf Mitnahme derart koppelbar ist, dass der Fahrzeugsitz (14) bodenseitig entriegelbar ist.

2. Scharniermechanismus nach Anspruch 1,
**dadurch gekennzeichnet, dass** der Betätigungshebel (4) L-förmig ausgebildet ist und einen ersten Hebelarm (10) und einen zweiten Hebelarm (11) umfasst, welche in einem Winkel von 90 Grad zueinander angeordnet sind.

3. Scharniermechanismus nach Anspruch 1 oder 2,
**dadurch gekennzeichnet, dass** der Betätigungshebel (4) in seinem zentralen Bereich um eine Schwenkachse (13) schwenkbar und gestellfest an der Lehne (16) des Fahrzeugsitzes (14) angeordnet ist.

4. Scharniermechanismus nach Anspruch 2 oder 3,
**dadurch gekennzeichnet, dass** an einem freien Ende des ersten Hebelarms (10) ein abragender Gleitnocken (20) angeordnet ist.

5. Scharniermechanismus nach Anspruch 3 oder 4,
**dadurch gekennzeichnet, dass** der Betätigungshebel (4) mittels einer Feder (19), welche im Bereich der Schwenkachse (13) angeordnet ist, vorgespannt ist.

6. Scharniermechanismus nach Anspruch 4 oder 5,
**dadurch gekennzeichnet, dass** der Gleitnocken (20) des ersten Hebelarms (10) des Betätigungshebels (4) entlang eines ersten Betätigungswegs (9) oder eines zweiten Betätigungswegs (12) bewegbar ist.

7. Scharniermechanismus nach Anspruch 6,
**dadurch gekennzeichnet, dass** der erste Betätigungsweg (9) als Betätigungskontur (24) ausgebildet ist und eine Bewegung des ersten Hebelarms (10) des Betätigungshebels (4) entlang des ersten Betätigungswegs (9) den Umklappvorgang der Rückenlehne des Fahrzeugsitzes bei feststehendem Sitzteil bewirkt.

8. Scharniermechanismus nach Anspruch 6,
**dadurch gekennzeichnet, dass** der zweite Betätigungsweg (12) als Gleitkontur (29) ausgebildet ist und eine Bewegung des ersten Hebelarms (10) des Betätigungshebels (4) entlang des zweiten Betätigungswegs (12) den Umklappvorgang der Rückenlehne (16) bei der gleichzeitigen oder nachfolgenden Schwenkbewegung des Sitzteils (15) bewirkt.

9. Scharniermechanismus nach einem der Ansprüche 6 bis 8,
**dadurch gekennzeichnet, dass** der erste Betätigungsweg (9) in Abhängigkeit der Position des Umlenkhebels (7) blockierbar ist.

10. Verfahren zum Betrieb eines Fahrzeugsitzes (14) mit einem Scharniermechanismus nach einem der Ansprüche 1 bis 9, **dadurch gekennzeichnet, dass** mit einem ersten Bedienelement (17) ein Umklappvorgang einer Lehne (16) des Fahrzeugsitzes (14) bei einem feststehenden Sitzteil (15) aktuiert wird, so dass die Lehne (16) flach auf dem Sitzteil (15) des Fahrzeugsitzes (14) aufliegt, und dass mit einem zweiten Bedienelement (18) ein Umklappvorgang der Lehne (16) bei einer gleichzeitigen oder nachfolgenden Schwenkbewegung des Sitzteils (15) aktuiert wird, wobei der Umklappvorgang der Lehne (16) und Schwenkbewegung des Sitzteils (15) nach Betätigung der Bedienelemente (17, 18) selbsttätig ablaufen.

## Claims

1. Hinge mechanism for a vehicle seat (14) comprising:
- an actuation lever (4),
- a release lever (5),
- a redirection lever (7) and a redirection rod (8) which is connected thereto at the end side,
- a first operating element (17) for a folding-over operation of a backrest (16) in the direction toward a seat member (15) with a fixed seat member (15), and
- a separate second operating element (18) for folding over the backrest (16) with a simultaneous or subsequent pivot movement of the seat member (15), wherein,
- in the event of actuation of the first operating element (17), the redirection lever (7) is able to be coupled to the first operating element (17) for entrainment in such a manner that the redirecting rod (8) opens the hinge mechanism or,
- when the second operating element (18) is actuated, the element opens the hinge mechanism directly, and the actuation lever (4) is coupleable to the release lever (5) for entrainment in such a manner that the vehicle seat (14) is unlockable at the floor side.

2. Hinge mechanism according to Claim 1,
**characterized in that** the actuation lever (4) is constructed in an L-shaped manner and comprises a first lever arm (10) and a second lever arm (11) which are arranged at an angle of 90 degrees relative to each other.

3. Hinge mechanism according to Claim 1 or 2,
**characterized in that** the actuation lever (4) is fixed on the backrest (16) of the vehicle seat (14) in the central region thereof so as to be able to be pivoted about a pivot axle (13).

4. Hinge mechanism according to Claim 2 or 3,
**characterized in that** a protruding sliding cam (20) is arranged at a free end of the first lever arm (10).

5. Hinge mechanism according to Claim 3 or 4, **characterized in that** the actuation lever (4) is pretensioned by means of a spring (19) which is arranged in the region of the pivot axle (13).

6. Hinge mechanism according to Claim 4 or 5, **characterized in that** the sliding cam (20) of the first lever arm (10) of the actuation lever (4) is movable along a first actuation path (9) or a second actuation path (12).

7. Hinge mechanism according to Claim 6, **characterized in that** the first actuation path (9) is constructed as an actuation contour (24) and a movement of the first lever arm (10) of the actuation lever (4) along the first actuation path (9) brings about the folding-over operation of the backrest of the vehicle seat with the seat member fixed.

8. Hinge mechanism according to Claim 6, **characterized in that** the second actuation path (12) is constructed as a sliding contour (29) and a movement of the first lever arm (10) of the actuation lever (4) along the second actuation path (12) brings about the folding-over operation of the backrest (16) with the simultaneous or subsequent pivot movement of the seat member (15).

9. Hinge mechanism according to one of Claims 6 to 8, **characterized in that** the first actuation path (9) is blockable as a function of the position of the redirection lever (7).

10. Method for operating a vehicle seat (14) having a hinge mechanism according to one of Claims 1 to 9, **characterized in that**, with a first operating element (17), a folding-over operation of a backrest (16) of the vehicle seat (14) is actuated with a fixed seat member (15) so that the backrest (16) rests flat on the seat member (15) of the vehicle seat (14) or **in that**, with a second operating element (18), a folding-over operation of the backrest (16) with a simultaneous or subsequent pivot movement of the seat member (15) is actuated, wherein the folding-over operation of the backrest (16) and the pivot movement of the seat member (15) are carried out independently after the operating elements (17, 18) have been actuated.

## Revendications

1. Mécanisme de charnière pour un siège de véhicule (14),
comprenant
- un levier d'actionnement (4),
- un levier de libération (5),
- un levier de renvoi (7) et une tige de renvoi (8) couplée du côté des extrémités à celui-ci,
- un premier élément de manipulation (17) pour un processus de rabattement d'un dossier (16) dans la direction d'une partie de siège (15) sur une partie de siège stationnaire (15) et
- un deuxième élément de manipulation séparé (18) pour un rabattement du dossier (16) lors d'un mouvement pivotant simultané ou suivant de la partie de siège (15),
- lors de l'actionnement du premier élément de commande (17), le levier de renvoi (7) pouvant être couplé avec le premier élément de manipulation (17) avec entraînement, de sorte que la tige de renvoi (8) ouvre le mécanisme de charnière, et
- lors de l'actionnement du deuxième élément de manipulation (18) celui-ci ouvre directement le mécanisme de charnière et le levier d'actionnement (4) peut être couplé avec le levier de libération (5) avec entraînement, de sorte que le siège de véhicule (14) puisse être déverrouillé du côté du sol.

2. Mécanisme de charnière selon la revendication 1, **caractérisé en ce que** le levier d'actionnement (4) est configuré en forme de L et comprend un premier bras de levier (10) et un deuxième bras de levier (11), qui sont disposés à un angle de 90 degrés l'un par rapport à l'autre.

3. Mécanisme de charnière selon la revendication 1 ou 2,
**caractérisé en ce que** le levier d'actionnement (4) dans sa zone centrale est disposé de manière pivotante autour d'un axe de pivotement (13) et de manière solidaire du bâti sur le dossier (16) du siège de véhicule (14).

4. Mécanisme de charnière selon la revendication 2 ou 3,
**caractérisé en ce que** sur une extrémité libre du premier bras de levier (10) une came coulissante dépassant en saillie (20) est disposée.

5. Mécanisme de charnière selon la revendication 3 ou 4,
**caractérisé en ce que** le levier d'actionnement (4) est précontraint au moyen d'un ressort (19), qui est disposé au niveau de l'axe de pivotement (13).

6. Mécanisme de charnière selon la revendication 4 ou 5,
**caractérisé en ce que** la came coulissante (20) du premier bras de levier (10) du levier d'actionnement (4) est déplaçable le long d'un premier trajet d'actionnement (9) ou d'un deuxième trajet d'actionnement (12).

7. Mécanisme de charnière selon la revendication 6, **caractérisé en ce que** le premier trajet d'actionnement (9) est configuré comme un contour d'actionnement (24) et un mouvement du premier bras de levier (10) du levier d'actionnement (4) le long du premier trajet d'actionnement (9) provoque le processus de rabattement du dossier du siège de véhicule lorsque la partie de siège est stationnaire.

8. Mécanisme de charnière selon la revendication 6, **caractérisé en ce que** le deuxième trajet d'actionnement (12) est configuré comme un contour lisse (29) et un mouvement du premier bras de levier (10) du levier d'actionnement (4) le long du deuxième trajet d'actionnement (12) provoque le processus de rabattement du dossier (16) lors du mouvement de pivotement simultané ou suivant de la partie de siège (15).

9. Mécanisme de charnière selon une des revendications 6 à 8,
**caractérisé en ce que** le premier trajet d'actionnement (9) peut être bloqué en fonction de la position du levier de renvoi (7).

10. Procédé de fonctionnement d'un siège de véhicule (14) comportant un mécanisme de charnière selon une des revendications 1 à 9,
**caractérisé en ce qu'**avec un premier élément de manipulation (17) un processus de rabattement d'un dossier (16) du siège de véhicule (14) sur une partie de siège stationnaire (15) peut être actionné, de sorte que le dossier (16) repose à plat sur la partie de siège (15) du siège de véhicule (14), et **en ce que** avec un deuxième élément de manipulation (18) un processus de rabattement du dossier (16) lors d'un mouvement de pivotement simultané ou suivant de la partie de siège (15) soit actionné, le processus de rabattement du dossier (16) et le mouvement de pivotement de la partie de siège (15) se déroulant automatiquement après l'actionnement des éléments de manipulation (17, 18).
